# DEMANDE DE BREVET EUROPEEN

(11) **EP 4 650 194 A1**
(43) Date de publication de la demande: **19.11.2025**
(21) Numéro de dépôt: 25169712.4
(22) Date de dépôt: 10.04.2025
(51) Int. Cl.: B60G 11/02, F16F 1/26, F16F 1/22

(54) **RESSORT À LAME AVEC BUTÉE D'ATTAQUE INCORPORÉE**

(30) Priorité: 16.05.2024 FR 2405013
(71) Demandeur: Stellantis Auto SAS, 78300 Poissy (FR)
(72) Inventeur: AFRIAD, IDRISS, 20200 CASABLANCA (MA); LAHLALI, BADREDDINE, 20200 CASABLANCA (MA)
(74) Mandataire: BCIP

(57) **Abrégé**

L'invention concerne un dispositif (1) de butée de fin de course conçu pour équiper un ressort (2) à lames de suspension d'un véhicule automobile, le ressort (2) étant du type comprenant deux axes (4) de fixation et plusieurs lames (5) d'amortissement s'étendant entre les axes (4) de fixation du ressort (2), le dispositif (1) comprenant deux têtes (6) d'attache, chacune conçue pour être fixée à un axe (4) de fixation, le dispositif (1) comprenant un élément de liaison (7) reliant les têtes (6) d'attache et conçu pour se déformer afin, d'une part, de permettre le rapprochement des axes (4) de fixation et pour, d'autre part, limiter l'éloignement des axes (4) de fixation à une distance d'éloignement maximale, lorsque les têtes (6) du dispositif (1) sont fixées sur les axes (4) du ressort (2) et que ce dernier se déforme pour amortir un déplacement du véhicule sur lequel il est monté.

## Description

Le domaine technique concerne les dispositifs de butée pour les ressorts à lames de véhicules automobiles, les suspensions comprenant un tel dispositif monté sur un ressort à lames, et enfin les véhicules automobiles présentant au moins une telle suspension.

Certains véhicules automobiles comportent, pour une roue, une suspension comprenant un ressort à lames capable de subir des déformations élastiques pour freiner les mouvements de la roue. Afin d'éviter des dommages au ressort à lames et également éviter que la roue ne percute la caisse du véhicule, la caisse du véhicule comporte une butée de fin de course prévue pour arrêter de manière rapide la course d'une suspension en cas de choc important subi par la suspension, à cause d'un obstacle par exemple. Une telle butée est, par exemple, réalisée par un butoir déporté sur la caisse et sur lequel les lames du ressort viennent buter.

La réalisation d'une telle butée complexifie la conception de la suspension du véhicule et nécessite une pièce supplémentaire. Or, les constructeurs d'automobiles cherchent à simplifier la conception de leurs véhicules dans un contexte de réduction des coûts de développement, de production et de logistique.

Ainsi, il existe un besoin d'une solution permettant de supprimer le besoin d'une butée de fin de course déportée.

La présente invention a pour objet de pallier les problèmes exposés précédemment. Dans ce contexte technique, un but de la présente invention est de fournir un dispositif de butée de fin de course pour équiper un ressort à lames et remplacer une butée déportée.

A cet effet, la présente invention se rapporte à un dispositif de butée de fin de course conçu pour équiper un ressort à lames de suspension d'un véhicule automobile, le ressort étant du type comprenant deux axes de fixation et plusieurs lames d'amortissement s'étendant entre les axes de fixation du ressort, le dispositif comprenant deux têtes d'attache, chacune conçue pour être fixée à un axe de fixation, le dispositif comprenant un élément de liaison reliant les têtes d'attache et conçu pour se déformer afin, d'une part, de permettre le rapprochement des axes de fixation et pour, d'autre part, limiter l'éloignement des axes de fixation à une distance d'éloignement maximale, lorsque les têtes du dispositif sont fixées sur les axes de fixation du ressort et que ce dernier se déforme pour amortir un déplacement du véhicule sur lequel il est monté.

L'invention concerne également une suspension de véhicule comprenant un ressort à lames, présentant deux axes de fixation, permettant la fixation du ressort au véhicule, et plusieurs lames d'amortissement s'étendant entre les axes de fixation, la suspension comprenant en outre un dispositif selon l'invention fixé sur le ressort, chaque tête d'attache étant fixée sur un axe de fixation du ressort, l'élément de liaison étant conçu pour se déformer pour permettre le rapprochement des axes de fixation et pour limiter l'éloignement des axes de fixation à une distance d'éloignement maximale, correspondant à leur distance d'éloignement en fin de course de la suspension.

L'invention concerne enfin un véhicule automobile comprenant au moins une suspension selon l'invention.

Ainsi, le dispositif selon l'invention, grâce à l'élément de liaison, permet en effet de contrôler la distance entre les axes de fixation du ressort en limitant la distance à la distance d'éloignement maximale. Le dispositif de butée selon l'invention permet donc de former une suspension selon l'invention, dont le ressort à lames est directement équipé d'un butoir de fin de course, qui permet d'éviter la déformation excessive du ressort à lames en fin de course. Le dispositif selon l'invention réduit la complexité et les coûts de fabrication.

Selon un mode de réalisation du dispositif, l'élément de liaison est formé d'une bande en matériau élastomère reliant les têtes d'attache.

Avantageusement alors, la longueur maximale de la bande sous tension définit la distance d'éloignement maximale.

Selon une possibilité du dispositif de butée, chaque tête d'attache est conçue pour entourer au moins en partie un axe de fixation.

Selon un mode de réalisation, chaque tête d'attache vient de matière avec l'élément de liaison.

Selon une possibilité de la suspension, lorsque l'élément de liaison est formé d'une bande en matériau élastomère reliant les têtes d'attache, la bande en matériau élastomère présente une longueur telle qu'elle est tendue lorsque la suspension est en fin de course.

L'invention sera mieux comprise à la lecture de la description détaillée qui va suivre, donnée uniquement à titre d'exemple non limitatif et faite en se référant aux dessins annexés sur lesquels :
[Fig. 1] la figure 1 représente une vue en perspective d'une suspension selon l'invention, dans une position intermédiaire ;
[Fig. 2] la figure 2 représente une vue de côté de la suspension de la figure 1 dans une position de fin de course d'attaque ;

Dans ces figures, les mêmes références sont utilisées pour désigner les mêmes éléments.

Un dispositif 1 de butée de fin de course selon l'invention, illustré sur les figures, est conçu pour équiper un ressort 2 à lames de suspension d'un véhicule automobile, également illustré sur les figures, pour former une suspension 3 selon l'invention.

Le ressort 2 à lames comprend classiquement deux axes 4 de fixation, pour permettre sa fixation au véhicule, et plusieurs lames 5 d'amortissement s'étendant entre les axes 4 de fixation du ressort 2. Le nombre et les dimensions des lames 5 d'amortissement confèrent au ressort 2 son pouvoir d'amortissement. Lorsque le ressort 2 est monté sur un véhicule pour participer à la suspension du véhicule, les axes 4 de fixation s'approchent ou s'éloignent les uns des autres. Lorsque le ressort 2 à lames, monté sur un véhicule, est soumis à une force d'attaque, la distance d'éloignement entre les axes 4 de fixation augmente.

Le dispositif 1 comprenant deux têtes 6 d'attache, illustrées sur les figures, chacune conçue pour être fixée à un axe 4 de fixation. Chaque tête 6 d'attache est conçue pour entourer au moins en partie un axe 4 de fixation.

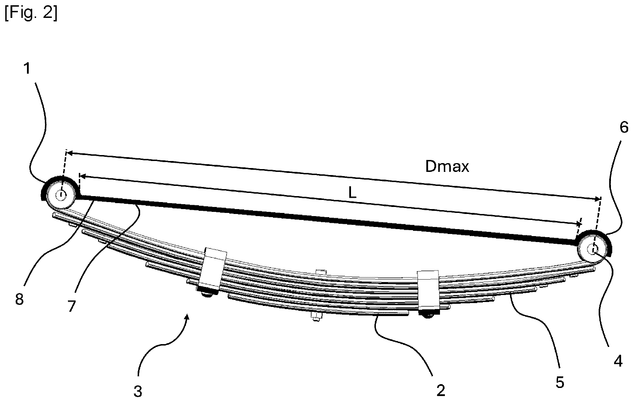

Comme illustré sur les figures, le dispositif 1 comprend en outre un élément de liaison 7 reliant les têtes 6 d'attache. L'élément de liaison 7 est conçu pour se déformer afin, d'une part, de permettre le rapprochement des axes 4 de fixation, lorsque le ressort 2 subit une détente. L'élément de liaison 7 est également conçu pour, d'autre part, limiter l'éloignement des axes 4 de fixation à une distance d'éloignement maximale Dmax, illustrée sur la figure 2, lorsque les têtes 6 du dispositif 1 sont fixées sur les axes 4 de fixation du ressort 2 et que ce dernier se déforme pour amortir un déplacement du véhicule sur lequel il est monté.

Dans l'exemple illustré sur les figures, l'élément de liaison 7 est formé d'une bande 8 en matériau élastomère. L'épaisseur, la largueur ainsi que la nature de la bande 8 d'élastomère sont choisies pour assurer une flexibilité adaptée aux fonctions de l'élément de liaison 7 ainsi qu'une résistance suffisante pour permettre la limitation de l'éloignement des axes 4 de fixation à la distance d'éloignement maximale Dmax. Les propriétés de la bande 8 sont choisies pour que la longueur maximale de la bande 8 définit la distance d'éloignement maximale Dmax. En particulier, lorsque la bande 8 est conçue pour éviter les élongations élastiques, la longueur maximale de la bande 8 correspond à la longueur de la bande 8.

Avantageusement, chaque tête 6 d'attache vient de matière avec l'élément de liaison 7.

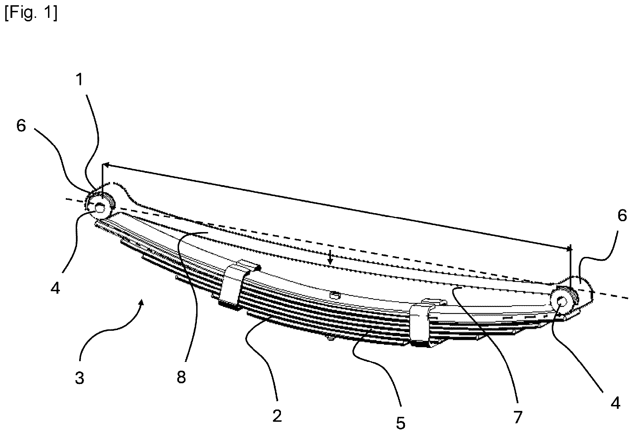

Comme illustré sur la figure 1, lorsque la suspension 3 est en position nominale, c'est-à-dire déformée par le poids du véhicule au repos ou dans une position intermédiaire (c'est-à-dire une position entre la position nominale et la position de fin de course), la longueur de la bande 8 de l'élément de liaison 7 est telle que la bande 8 est non tendue, c'est-à-dire est courbée en formant, par exemple, une chainette.

Sur la figure 2, la suspension 3 est représentée dans une position de fin de course d'attaque. L'élément de liaison 7 du dispositif 1 empêche l'éloignement des axes 4 de fixation au-delà de la distance d'éloignement maximale Dmax et forme une butée de fin de course. La bande 8 de l'élément de liaison présente une longueur maximale L telle que la bande 8 est tendue lorsque la suspension 3 est en fin de course.

Ainsi, le dispositif 1, grâce à l'élément de liaison 7, permet de contrôler la distance entre les axes 4 de fixation du ressort 2 en limitant la distance à la distance d'éloignement maximale Dmax. Le dispositif 1 de butée permet donc de former une suspension 3 dont le ressort 2 à lames est directement équipé d'un butoir de fin de course, qui permet d'éviter la déformation excessive du ressort 2 à lames en fin de course. Le dispositif 1 réduit donc la complexité et les coûts de fabrication.

L'invention ne se limite pas au mode de réalisation du dispositif de butée décrit ci-avant, seulement à titre d'exemple, mais d'autres modes de réalisation peuvent être conçus par l'homme de métier sans sortir du cadre et de la portée de la présente invention.

## Revendications

1. Dispositif (1) de butée de fin de course conçu pour équiper un ressort (2) à lames de suspension d'un véhicule automobile, le ressort (2) étant du type comprenant deux axes (4) de fixation et plusieurs lames (5) d'amortissement s'étendant entre les axes (4) de fixation du ressort (2), le dispositif (1) comprenant deux têtes (6) d'attache, chacune conçue pour être fixée à un axe (4) de fixation, le dispositif (1) comprenant un élément de liaison (7) reliant les têtes (6) d'attache et conçu pour se déformer afin, d'une part, de permettre le rapprochement des axes (4) de fixation et pour, d'autre part, limiter l'éloignement des axes (4) de fixation à une distance d'éloignement maximale (Dmax), lorsque les têtes (6) du dispositif (1) sont fixées sur les axes (4) de fixation du ressort (2) et que ce dernier se déforme pour amortir un déplacement du véhicule sur lequel il est monté.

2. Dispositif (1) de butée selon la revendication 1, **caractérisé en ce que** l'élément de liaison (7) est formé d'une bande (8) en matériau élastomère reliant les têtes (6) d'attache.

3. Dispositif (1) de butée selon la revendication 2, **caractérisé en ce que** la longueur maximale (L) de la bande (8) sous tension définit la distance d'éloignement maximale (Dmax).

4. Dispositif (1) de butée selon la revendication 1 ou 2, **caractérisé en ce que** chaque tête (6) d'attache est conçue pour entourer au moins en partie un axe (4) de fixation.

5. Dispositif (1) de butée selon l'une des revendications 1 à 4, **caractérisé en ce que** chaque tête (6) d'attache vient de matière avec l'élément de liaison (7).

6. Suspension (3) de véhicule comprenant un ressort (2) à lames, présentant deux axes (4) de fixation, permettant la fixation du ressort (2) au véhicule, et plusieurs lames (5) d'amortissement s'étendant entre les axes (4) de fixation, la suspension (3) comprenant en outre un dispositif (1) selon l'une des revendications 1 à 5 fixé sur le ressort (2), chaque tête (6) d'attache étant fixée sur un axe (4) de fixation du ressort (2), l'élément de liaison (7) étant conçu pour se déformer pour permettre le rapprochement des axes (4) de fixation et pour limiter l'éloignement des axes (4) de fixation à une distance d'éloignement maximale (Dmax), correspondant à leur distance d'éloignement en fin de course de la suspension (3).

7. Suspension (3) selon la revendication 6, en combinaison avec la revendication 2, **caractérisé en ce que** la bande (8) en matériau élastomère présente une longueur (L) telle qu'elle est tendue lorsque la suspension (3) est en fin de course.

8. Véhicule automobile comprenant au moins une suspension (3) selon la revendication 6 ou 7.
